# EUROPEAN PATENT SPECIFICATION

(11) **EP 1 615 809 B1**
(45) Date of publication and mention of the grant of the patent: **17.03.2010**
(21) Application number: 04728485.6
(22) Date of filing: 20.04.2004
(51) Int. Cl.: B60R 21/34

(54) **A SAFETY DEVICE**
SICHERHEITSVORRICHTUNG
DISPOSITIF DE SECURITE

(30) Priority: 24.04.2003 GB 0309307
(43) Date of publication of application: 18.01.2006
(73) Proprietor: AUTOLIV DEVELOPMENT AKTIEBOLAG, 447 83 Vargarda (SE)
(72) Inventor: HAGLUND, Lennart, S-447 32 Vargarda (SE)
(74) Representative: Beattie, Alex Thomas Stewart
(86) International application number: PCT/SE2004/000599
(87) International publication number: WO 2004/094204

(56) References cited:
- EP-A2- 1 293 400
- EP-A2- 1 295 763
- WO-A1-03/086826
- DE-A1- 10 116 717
- FR-A1- 2 833 222

## Description

**THE PRESENT INVENTION** relates to a safety device, and more particularly relates to a safety device to be mounted on a vehicle to provide protection for a pedestrian struck by the vehicle in an accident situation.

If a pedestrian is struck by a vehicle in an accident situation, the pedestrian may be thrown in such a way that the head or torso of the pedestrian impacts with the hood or bonnet of the motor vehicle. The hood or bonnet of the motor vehicle may deform as a consequence of such impact, but, if the hood or bonnet is closed, the hood or bonnet may only deform by a very short distance before the underside of the hood or bonnet will engage with part of the engine located under the hood or bonnet.

Consequently it has been proposed to provide a mechanism which, in response to the sensing of an impact with a pedestrian, partially raises the hood or bonnet of the vehicle. Thus, when the pedestrian impacts with the hood or bonnet, the hood or bonnet is able to deform over a substantial distance before the underside thereof engages with the engine. During this extensive deformation of the hood or bonnet, the head or torso of the pedestrian may be decelerated appropriately, relative to the vehicle, without substantial injury arising.

Various arrangements have been proposed to raise the rear part of the bonnet or hood in response to an accident situation involving an impact with a pedestrian. Typically, however, a bonnet or hood is raised for servicing purposes about hinges provided at the rear part of the bonnet. Consequently it has been necessary to devise special hinge arrangements which firstly enable the bonnet to be lifted in the normal way, about a pivot axis defined at the rear of the bonnet or hood by the hinges, and which secondly permit the rear part of the bonnet to be raised in an accident situation.

EP-A-0967128 discloses an arrangement of this type. In the embodiments described in this Specification, the rear part of the bonnet or hood is mounted on pivot pins which constitute hinge pins at the rear edge of the hood or bonnet. The pivot pins are received within a vertical channel having an enlarged lower part, one side-wall of the channel being defined by a member which is pivotally connected to the member defining the other side-wall of the channel, the pivotally mounted member being spring-biased so that the channel has a minimum width. The minimum width of the channel is less than the diameter of the pin, apart from in the lower part of the channel. Thus, the pin is retained within the lower part of the channel, but can be released from the channel when subjected to a substantial upward force, the pivotally mounted member defining said one side-wall, the channel then moving slightly against the spring-bias. An arrangement of this type may become disconnected if the rear of the hood or bonnet is subjected to a sudden upward force, for example when travelling along a very uneven road.
WO 03/086826 discloses a safety device to lift the rear part of the bonnet or hood of the motor vehicle comprising a lifting element actuable to lift the rear part of the hood or bonnet and a release mechanism in order to allow the bonnet or hood to be raised.

DE-A-19957872 discloses another arrangement in which the pivot point about which the hood or bonnet is hinged to the main part of a vehicle is itself provided at the free end of a pivotally mounted arm. In an initial position of the pivotally mounted arm, the hood or bonnet may be opened or closed in a conventional manner. However, in response to an accident situation, an actuator may move the pivotally mounted arm, thus raising the pivot point about which the rear part of the hood or bonnet is connected to the main part of the vehicle. As a consequence, the rear part of the hood or bonnet itself is lifted up. Such an arrangement is relatively complicated.

GB-A-2,354,797 discloses a hinge arrangement according to the preamble of claim 1 and in which the pivot point about which the bonnet usually pivots is connected to the main part of the car by means of a pivotally mounted arm. The pivotally mounted arm is held in a normal position by a catch member, but can pivot to a position in which the rear part of the hood or bonnet is raised, upon release of the catch member. The catch member is adapted to release itself whenever the rear part of the hood or bonnet is subjected to a substantial upward force. Again, an arrangement of this type may malfunction in that the rear part of the bonnet may rise if, for example, the vehicle is travelling along a very uneven road.

A further problem that may be encountered with the arrangements described in DE-A-19957872 and GB-A-2,354,797, is that the rear portion of the bonnet may be constrained to move substantially vertically upwardly. If the bonnet has a latch at the front which normally retains the bonnet in a closed position, that front latch may not permit such vertical movement of the rear part of the bonnet, unless a specially designed latch is provided which is permitted to move appropriately. If such a latch is provided, the consequent movement of the hood or bonnet may reveal hard parts of the underlying chassis in the region where the pedestrian may strike the car. Alternatively, of course, the latch may break if subjected to an over-large force.

The present invention relates to a safety device of the type intended to lift a hood or bonnet in response to an accident situation involving an impact with a pedestrian.

According to the present invention, there is provided a safety device to lift the rear part of the hood or bonnet of a motor vehicle, the rear part of the hood or bonnet being connected to the main part of the vehicle by a hinge to permit the front part of the hood or bonnet to be opened, the hinge comprising a lower mounting arm, and also an upper mounting arm having a first end thereof pivotally connected to the main part of the, vehicle and having part thereof releasably connected to the hood or bonnet by a releassable connection, wherein there is a release mechanism to release said releasable connection, and a flange depending from the rear part of the hood or bonnet at a position in the region of the mounting arms, the hinge being associated with a gas spring unit, the gas spring unit being pivotally connected at one end to the flange by means of a connection, and being connected at the other end to an anchoring point to raise the rear part of the hood or bonnet when said releasable connection is released.

Preferably, the upper mounting arm has a second end thereof connected to said flange provided on the hood or bonnet by means of a pin-in-slot connection, the releasable connection serving to connect another part of the flange to the upper mounting arm.

Advantageously, the gas spring unit is located to retain the hood or bonnet in an open condition when the front part of the hood or bonnet is open.

Conveniently, the releasable connection the releasable connection comprises a piston element contained within a housing mounted on the gas spring unit, a piston rod of the piston element protruding from the housing and engaging an aperture formed in the upper mounting arm, the piston rod being movable to a retracted position in which the piston rod is withdrawn into the housing, thus disengaging the piston rod from the aperture.

Preferably, a pyrotechnic unit is provided to supply gas to move the piston to the retracted position.

Advantageously, the piston element comprises a piston head and said piston rod, the piston head being received within a chamber formed within said housing, the piston rod initially projecting from said housing, there being a gas supply duct to supply gas to the chamber in which the piston rod moves at a position between the piston head and one end of the chamber to move the piston rod to a retracted position.

Conveniently, the piston head has a hollow spigot directed towards the pyrotechnic unit, the spigot leading to a gas opening provided adjacent the piston head so that gas flows through the spigot and moves the piston rod towards the pyrotechnic unit.

Preferably, the gas spring unit is initially sealed by a rupturable membrane which is ruptured as a consequence of actuation of the pyrotechnic unit, the rupturable membrane communicating with a gas flow path which leads to atmosphere.

Advantageously a piston element is provided having a hollow extension initially located adjacent the rupturable membrane, the piston element being located to receive gas from the pyrotechnic unit to move the piston element to rupture the rupturable membrane and to open the gas flow path to atmosphere.

Conveniently, the gas spring unit is initially sealed by a rupturable membrane, there being a solenoid driven plunger having an extension located, on movement of the plunger as a consequence of actuation of the solenoid, to rupture the rupturable membrane, the extension and the plunger defining a gas flow duct leading to a chamber containing a piston element with a piston rod, such that gas flowing through the gas flow duct will cause the piston rod to move, retracting part of the piston rod and also opening a vent aperture leading to atmosphere.

Advantageously, the gas spring unit is initially sealed by a rupturable membrane, there being a solenoid driven plunger having an extension located, on movement of the plunger as a consequence of actuation of the solenoid, to rupture the rupturable membrane, the extension and the plunger defining a gas flow duct leading to a chamber containing the piston element, such that gas flowing through the gas flow duct will cause the piston to move, retracting part of the piston rod and also opening a vent aperture leading to atmosphere.

Preferably, the gas spring unit is oriented so as to be inclined relative to the longitudinal axis of the hood or bonnet in the region of the hinge, after the hood or bonnet is closed.

In order that the invention may be more readily understood, and so that further features thereof may be appreciated, embodiments of the invention will now be described, by way of example, with reference to the accompanying drawings in which:
FIGURE 1 is an illustrative view of the rear part of a hood or bonnet illustrating a hinge arrangement incorporating a gas strut in an initial position,
FIGURE 2 is a view corresponding to Figure 1 showing the hood or bonnet opened in the conventional manner,
FIGURE 3 is a view corresponding to Figure 1 illustrating the hinge arrangement when opened as a consequence of an impact with a pedestrian,
Figure 4 is a sectional view of a combined gas strut and release pin for use in the embodiment of Figure 1,
Figure 5 is a sectional view of a gas strut associated with a separate release pin for use in a modified embodiment of the invention,
Figure 6 is a further view of a gas strut and release pin for use in an embodiment of the invention,
FIGURE 7 is a further view of a gas strut and release pin for use in an embodiment of the invention, and
FIGURE 8 is a view of a conventional gas strut, for purposes of comparison.

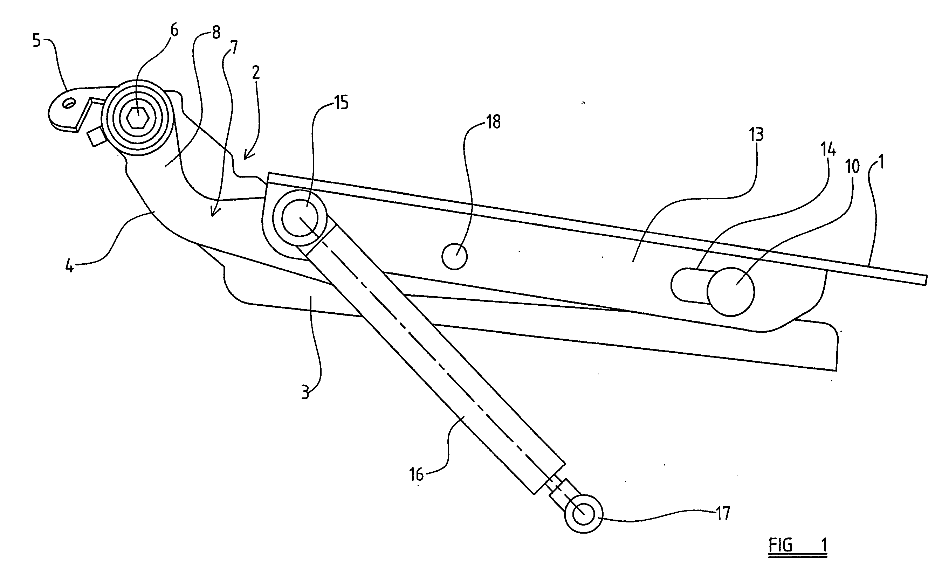

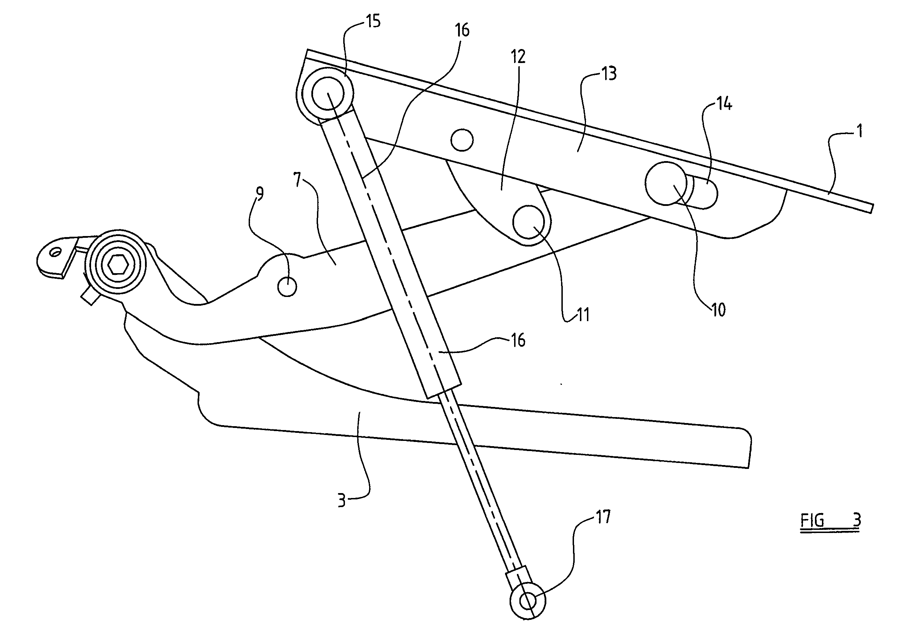

Referring initially to Figure 1 of the accompanying drawings, the rear part of the hood or bonnet 1 of a motor vehicle is illustrated. The hood or bonnet is connected to the underlying part of a vehicle by means of a hinge arrangement 2. The hinge arrangement 2 includes a lower mounting arm 3. The lower mounting arm 3 is of elongate form and is configured to be mounted to part of the motor vehicle in the region of the scuttle. The lower mounting arm has, at its rearward end, an upwardly extending portion 4, which may be provided with an additional mounting lug 5 to be connected to the vehicle, the upwardly extending portion 4 terminating with a pivotal connection 6 to an upper mounting arm 7. The upper mounting arm 7 is again of elongate form having, at its rearward end, an upwardly extending portion 8 which extends to the pivotal connection 6. As can be seen most clearly in Figure 3, at a point part way along its length, the upper mounting arm 7 is provided with an aperture 9. At its free end the upper mounting arm 7 is provided with a laterally extending pin 10 and, intermediate the aperture 9 and the pin 10, the upper mounting arm 7 is pivotally connected, by pivot 11, to a guide link 12.

A flange 13 depends from the rear part of the hood or bonnet at a position in the region of the mounting arms 3 and 7. At a forward end the flange 13 is provided with an elongate slot 14. The pin 10 carried at the free end of the upper mounting arm 7 extends through the slot 14 and is slideable along the slot 14.

At the other end of the flange 13, the flange is pivotally connected, by means of a connection 15, to one end of a gas spring unit 16, the lower end of which is connected to an anchoring point 17. In the closed position of the hood or bonnet illustrated in Figure 1, the gas spring unit is arranged so as to be inclined relative to the flange 13 so as to make an acute angle to the longitudinal axis of the flange 13. The gas spring unit 16 can therefore be considered to be inclined relative to the longitudinal axis of the hood or bonnet 1 in the region of the hinge arrangement 2.

At a point between the slot 14 and the pivotal connection 15, the flange is provided with a pivotal connection 18 which connects the flange to the other end of the guide link 12.

When the bonnet is closed, or in the "normal" position, the components of the hinge arrangement as described will have the condition illustrated in Figure 1. The upper mounting arm 7 lies immediately adjacent or, indeed, partially overlapping the lower mounting arm 3. The pin 10 carried on the upper mounting arm 7 will be at the forward end of the slot 14. The gas spring unit 16 will be in a compressed contracted form, and is not able to increase in length.

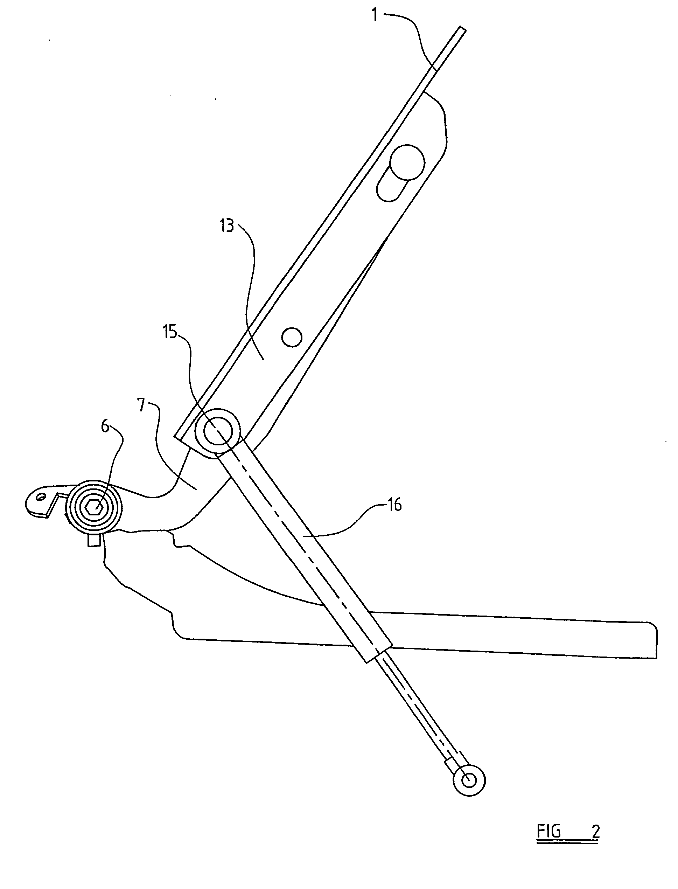

If the bonnet is to be opened in the normal way, to gain access to the engine, a catch at the very front of the bonnet is released and the forward part of the bonnet is moved upwardly. Thus the bonnet effects a pivotal movement about the transverse axis defined by the pivotal connection 6. The gas spring 16 will extend. The components will then have the relative condition shown in Figure 2.

Here it is to be mentioned that the gas spring unit 16, which will be described in greater detail below, is designed so that the length of the unit, when it is compressed, tends to increase. Thus the gas spring will help lift the bonnet. Also it is to be understood that the gas spring unit, in the embodiment of Figure 3, incorporates, in the region of the pivotal connection 15, a releasable locking element which locks the upper end of the gas spring, and thus the flange 13, to the aperture 9 formed in the upper mounting arm 7.

Thus, ordinarily, the upper mounting arm 7 and the flange 13 are secured together so that they can only move simultaneously and together. However, the gas spring unit 16 is configured so that, in response to a pedestrian impact, the gas spring unit 16 will release the releasable locking element and will then be able to increase in length to lift the rear part of the bonnet.

Thus, as can be seen from Figure 3, in response to a pedestrian impact, initially the connection between the upper mounting arm 7 and the combination of the gas spring unit 16 and flange 13 is broken, thus freeing the flange 13 to move relative to the upper mounting arm 7. The gas spring unit 16 is released and thus increases in length, and the rear part of the hood or bonnet is driven upwardly aided by the inclined orientation of the gas spring unit 16 relative to the hood or bonnet. A consequence of this movement is that the pin 10 provided at the free end of the upper mounting arm 7 moves along the slot 14 and the guide link 12 pivots relative to the upper mounting arm 7 and also relative to the flange 13 to provide a guiding function. The end result is that the bonnet 1 is moved to a position in which the rear part of the bonnet is elevated, the bonnet having pivoted about a virtual pivot axis defined by the conventional catch provided at the front of the bonnet. Because the bonnet is raised in this way, should the head or torso of the pedestrian impact with the bonnet, the bonnet may deform by a substantial distance, whilst retarding the head or torso of the pedestrian, before impacting with the engine block which is mounted beneath the bonnet 1.

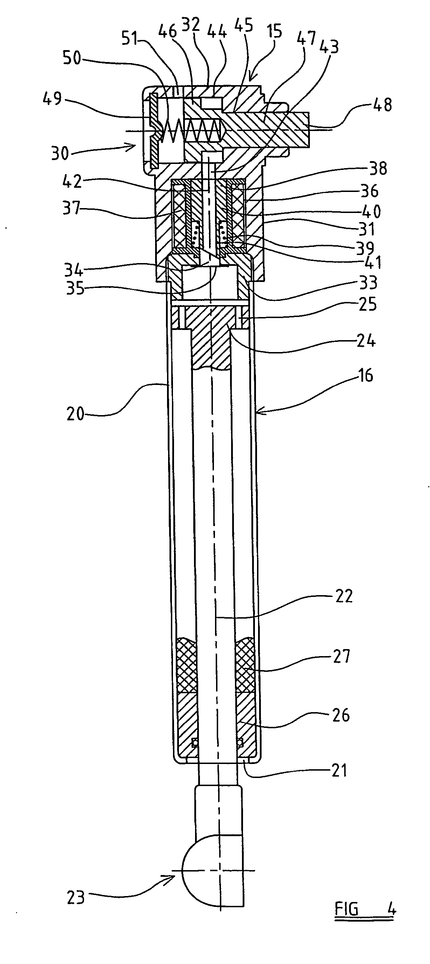

Turning now to Figure 4, the gas spring unit 16 is shown in cross-sectional view.

The gas spring unit 16 incorporates many components which are found in a conventional gas spring. The gas spring unit defines an elongate cylindrical housing 20, the lower end of which defines an aperture 21. A piston rod 22 passes through the aperture 21 extending into the cylindrical housing 20. The lower end of the piston rod 22 is provided with a connector 23 to be connected to the anchoring point 17. The upper end of the piston rod 22 is provided with a piston head 24, the piston head being provided with a plurality of gas flow passages 25 therethrough. The piston head 24 is a sliding fit within the cylindrical housing 20. Within the interior of the cylindrical housing 20 adjacent the aperture 21, a gas-tight seal 26 is provided. The cylinder initially contains a compressed gas at a pressure of, typically, 150 to 200 bar, and may contain a damping fluid or oil 27 shown adjacent the lower seal 26. The components of the gas spring unit 16 as described above are conventional.

The gas spring unit 16 illustrated in Figure 4 is shown in a compressed state. Gas within the cylindrical housing 20 will act on the entire upper face of the piston head 24, but can only act on that part of the lower face of the piston head 24 which surrounds the piston rod 22. Thus the high pressure gas acts on a much larger surface area of the upper face of the piston head 24 than the lower face of the piston head 24. Thus the pressurised gas exerts a down force on the piston head 24 tending to drive the piston rod 22 out of the cylindrical housing 20. Thus, should the gas spring be released from its compressed condition illustrated in Figure 4, it will tend to extend as a consequence of the differential forces applied to the piston head 24 by the compressed gas. The gas spring can be re-compressed by the application of an appropriate force tending to compress the gas spring, the spring returning to its initial condition. Whenever the spring changes condition gas flows through the gas flow passages 25.

The gas spring unit 16 shown in Figure 4 is provided, at its upper end, with a connector and actuator unit 30. The connector and actuator unit 30 incorporates the pivotal connection which connects the upper end of the gas spring unit 16 to the flange 13, and also includes the releasable locking element which initially engages the aperture 9 formed in the upper mounting arm 7. The connector and actuator unit further also includes a mechanism which, when actuated, effects the release of the releasable locking element to enable the gas spring unit 16 to extend in length, so as to move the hinge arrangement 2 to the condition shown in Figure 3.

The connector and actuator unit 30 comprises a housing having a first cylindrical region 31 to be engaged with one end of the cylindrical housing 20 in alignment with the axis thereof, and a second cylindrical region 32 extending transversely to the region 31 and associated with the releasable locking element.

The first cylindrical region 31 is provided, at its lower end, with a plug 33 which is received as a gas-tight sealing fit within the upper end of the housing 20. The plug 33 defines an axial passage 34, the lower end of which is sealed with a rupturable membrane 35 such as a foil.

The first cylindrical region 31 defines, above the plug 33, a cylindrical cavity 36. The cavity 36 contains a hollow cylindrical solenoid 37 adjacent the outer wall of the cavity. Contained within the central part of the solenoid 37 is a plunger 38 which is biased upwardly to an initial position by a spring 39. The plunger 38 defines a relatively large upper body part 40 and a lower cylindrical extension 41 of lesser diameter which terminates with a sharpened leading edge. A gas flow passage 42 extends through the extension 41 and through the main body part 40 of the plunger 38 leading to a further gas flow duct 43 which communicates with the second cylindrical region 32.

Here it is to be understood that initially the spring 39 biases the plunger 38 upwardly, but on actuation of the solenoid 37 the main body part 40 of the plunger will be driven downwardly and the sharp end of the extension 41 will penetrate the rupturable membrane 35 thus permitting the flow of high pressure gas from the interior of the cylindrical housing 20 to the gas flow duct 43.

The gas flow duct 43 opens into a cylindrical chamber 44 formed in the second cylindrical region 32 of the connector and actuator unit 30. The flow duct 43 opens into the chamber 44 at one end thereof. A piston element 45 is provided having a piston head 46 located within the chamber 44, and having a piston rod 47 which extends through said one end of the chamber 44 adjacent the flow duct 43. The piston head 46 is spaced from the said one end of the chamber 44 so that the gas flow duct 43 opens into the chamber between the piston head 46 and said one end. The piston rod 47 has a projecting part 48 which constitutes the releasable locking element which has been discussed above. The other end of the chamber 44 is closed by a closure plate 49 and a spring 50 is located between the closure plate 49 and the piston 45 to maintain the piston in an initial position in which the end part 48 of the piston rod 47 projects from the connector and actuator unit 30. The cylindrical chamber 44 is provided with an exhaust vent 51 adjacent the closure plate 49.

It is to be understood that when gas from the cylinder 20 flows through the flow duct 43, the piston 45 will be moved against the spring bias, drawing the piston head 46 further into the chamber 44 and thus withdrawing the initially projecting end part 48 of the piston rod 47 into the connection and actuation unit 30, thus withdrawing the end part 48 from the aperture 9 in the upper mounting arm 7.

In response to a sensed impact with a pedestrian, the solenoid 37 will be actuated. The plunger 38 will therefore move, rupturing the membrane 35 with its extension 41 and causing a flow of gas into the chamber 44. The piston 45 will move to the left as shown, thus withdrawing the end part 48 of the piston rod 47 from the aperture 9 effecting release. If any air becomes compressed between the piston head 46 and the plate 49, the air may escape through the vent 51.

Because the connection between the upper end of the gas spring unit 16 and the aperture 9 no longer exists, the gas spring is free to extend. Even though gas will escape, there will initially still be a sufficiently high pressure of gas within the gas spring to cause the gas spring to extend to move the rear part of the bonnet 1 to the raised position illustrated in Figure 3.

It is to be appreciated that when the piston 45 has moved fully to the left within the chamber 44, gas from the interior of the housing 20 may escape to atmosphere through the vent aperture 51. As the gas escapes to atmosphere, so the gas spring 16 will no longer provide a spring effect, and the rear part of the hood or bonnet may fall, under its own weight, so that the hood or bonnet returns to its initial position after an appropriate period of time. This is desirable since should the sensor which senses the impact with a pedestrian provide a signal, the rear part of the hood or bonnet will be raised, which will block or partially mask the view of the driver of the vehicle. It is therefore desirable for the bonnet to be returned to its initial position as soon as practicable, to ensure that the view of the driver is restricted for a minimum period of time.

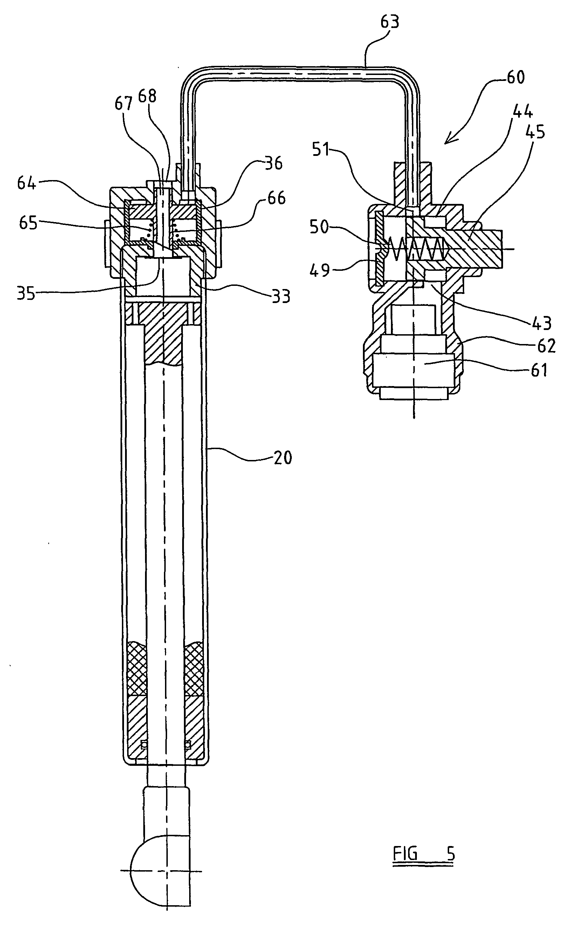

Figure 5 illustrates a modified embodiment of the invention in which the connector and actuator is split into two parts. In the embodiment of Figure 5 there is a connection unit 60. The connection unit 60 defines a chamber 44 as described above which contains a piston 45 as described above. In this embodiment, however, the gas flow duct 43 leading to the chamber 44 is supplied with gas from a pyrotechnic unit 61 which is mounted in a suitable housing part 62. The vent port 51 of the chamber 44 is connected to a gas flow duct 63 which extends into a chamber 36. The chamber 36 contains a plunger 64 in the form of a piston, the piston being biased upwardly by a spring 65, the piston having a tubular extension 66 equivalent to the extension 41 of the plunger 38 described with reference to Figure 4. The extension has a sharpened lower end configured to rupture a rupturable membrane 35 present on a sealing cap 33.

The plunger 64 carries an upwardly extending tubular extension 67 which passes through a bore 68 leading to the exterior of the gas spring unit. The tubular extensions 66 and 67 are interconnected to form a gas flow path.

It is to be understood that in response to an impact with a pedestrian the pyrotechnic unit 61 will be actuated generating a quantity of gas. Initially the gas acts on the head of the piston 45, moving the piston 45 towards the left, as shown in Figure 5, and thus releasing the connection between the piston unit and the aperture 9 formed in the upper mounting arm 7. The gas spring is thus released and is free to extend and, indeed, will extend moving the rear part of the hood or bonnet upwardly.

Gas flows through the gas flow pipe 63 and acts on the plunger 64. The extension 66 of the plunger 64 ruptures the rupturable membrane 35 and gas from the interior of the gas spring may then flow into the extension 66 and through the upwardly extending extension 67, escaping to atmosphere.

Consequently it is to be appreciated that on actuation of the pyrotechnic unit 61, initially the piston 45 is withdrawn to effect the release of the releasable locking element from the aperture 9, thus enabling the gas spring to extend to raise the rear part of the bonnet, and secondly the membrane 35 is ruptured which will permit gas to escape from the gas spring unit. The gas will escape in a relatively brief period of time, so that once the rear part of the bonnet has been lifted, the rear part of the bonnet will then lower itself automatically, once the high pressure gas in the gas spring unit has been vented to atmosphere.

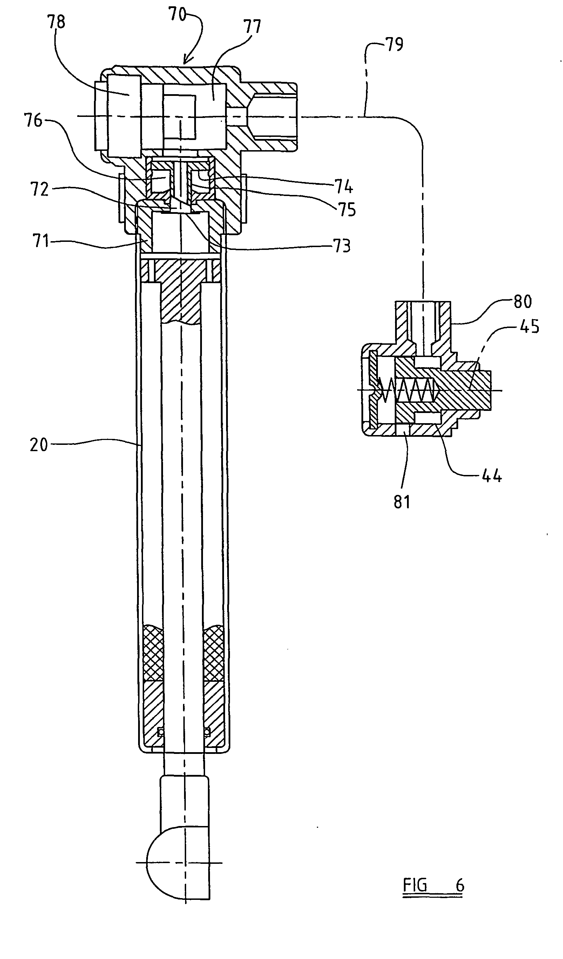

Figure 6 illustrates a further embodiment of the invention. In this embodiment of the invention a first housing 70 is mounted in position at the upper end of the cylindrical housing 20. The housing 20 has a plug 71 received as a gas-tight fit within the upper end of the cylindrical housing 20, the plug 71 defining a gas flow path 72 which is initially sealed by means of a rupturable membrane 73. A piston unit is provided, having a piston head 74 and an extension 75 with a sharpened lower end positioned, on movement of the piston, to rupture the membrane 73. The piston head 74 is initially held in position in a chamber 76 by means of a frangible connection. The chamber 76 communicates with a further chamber 77 which receives a pyrotechnic unit 78. The chamber 77 is connected by means of a gas flow conduit 79 to a second housing 80. The second housing 80 contains a chamber equivalent to the chamber 44 provided with a piston equivalent to the piston 45. The chamber 44 is provided with a vent aperture 81.

It is to be appreciated that in response to a pedestrian impact, the pyrotechnic unit 78 will be actuated. Gas will flow through the conduit 79 acting on the piston 45 withdrawing the piston 45 into the chamber 44 thus opening the vent port 81.

The piston head 74, in the chamber 76 adjacent the pyrotechnic unit 78, will be driven downwardly rupturing the membrane 73.

Thus, initially, the releasable locking element constituted by the piston 45 will be moved to the released position, enabling the gas spring to extend, and the rupturable membrane 73 will be ruptured permitting gas to escape from the cylindrical housing 20, through the chamber 77, through the conduit 79 into the chamber 44 and through the vent aperture 81. Thus again gas may be bled from the interior of the cylindrical housing 20 to enable the bonnet to be lowered after a relatively short period of time.

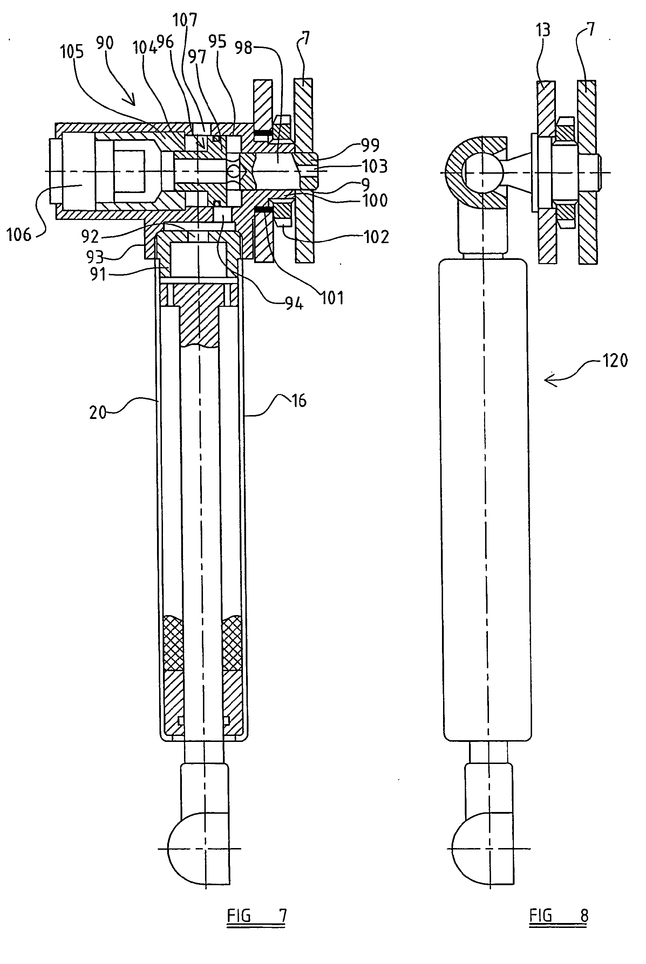

Figure 7 illustrates a further embodiment of the invention in which a connector and actuator unit 90 is provided at the upper end of the cylindrical housing 20. The connector and actuator unit 90 has a plug 91 received as a gas-tight fit within the upper end of the cylindrical housing 20. The plug 91 defines a gas flow duct 92 which is initially sealed by means of a rupturable membrane 93. The gas flow duct 92 leads to an inlet port 94 of a cylinder 95. Contained within the cylinder 95 is a piston element 96, the piston element 96 having a piston head 97 which is a sliding fit within the chamber 95. Extending from the piston head 97 is a piston rod 98 having a terminal portion 99 which extends from a projecting portion 100 of the housing forming the connector and actuator unit 90. The projecting portion 100 of the housing is of cylindrical form and passes through an appropriate aperture formed in the flange 13 provided on the bonnet 1. An appropriate washer or bush 101, for example of a self-lubricating material, is provided between the housing portion 100 and the flange 13. A retaining nut 102 is provided on a terminal threaded part of the projecting portion 100 of the housing. As shown in Figure 7 the terminal portion 99 of the piston rod 98 extends through the aperture 9 formed in the upper mounting arm 7.

The piston 96 is provided with a gas flow passage 103 which extends from the end face of the terminal portion 99 of the piston rod 98 to a point immediately adjacent the piston head 97 between the piston head 97 and the adjacent closed end of the cylinder 95. A further gas flow duct extends from a point adjacent the piston head 97, through the piston head and through a tubular spigot 104 which extends in the opposite direction to the piston rod 98, the spigot 104 being received as a sliding fit within a sleeve 105. A pyrotechnic unit 106 is connected to the other end of the sleeve 105. A vent port 107 is provided in the side-wall of the cylinder 95 in which the piston 96 moves, between the piston head 97 and the sleeve 105.

It is to be appreciated that when the pyrotechnic unit 106 is actuated, gas from the pyrotechnic unit will flow through the sleeve 105 and then through the tubular spigot 104, then being injected into the small space remaining between the piston head 97 of the piston 96 and the closed end of the chamber 95 in which the piston moves. The high pressure gas will flow through gas inlet port 94 and the gas flow duct 92 thus rupturing the rupturable membrane 93. Also the gas will act on the piston head 97 tending to move the piston towards the left as shown. Thus the piston 96 will move towards the pyrotechnic unit 106 with the spigot 104 sliding within the sleeve 105. Any gas initially trapped between the piston head 97 and the sleeve 105 may exit through the vent port 107.

As the piston 96 moves towards the left, so the terminal part 99 of the piston rod 98 is withdrawn from the aperture 9 formed in the upper mounting arm 7, thus effecting release of the upper mounting arm 7. The gas spring is then free to extend. However, because the rupturable membrane 93 has been ruptured, gas may flow from the gas spring, through the gas flow duct 92 and the inlet port 94, then flowing through the gas flow passage 103 formed in the piston, to escape to atmosphere. Thus the pressure of gas within the gas spring will be reduced, enabling the bonnet to return, relatively rapidly, to its initial position.

Figure 8 is provided simply for purposes of comparison and shows a conventional gas spring 120, not in accordance with the invention, which is permanently connected to a combination of the flange 13 and the upper mounting arm 7.

It is thus to be appreciated that a hinge arrangement of the type shown may be utilised with an "ordinary" gas spring which does not provide the release effect in the event that there is an impact with a pedestrian. This may facilitate the mass manufacture of motor vehicles since a uniform hinge arrangement may be used, that hinge arrangement being used selectively either with a gas spring which incorporates a connector and actuator arrangement as shown in Figure 7, or with a conventional gas spring 120 as shown in Figure 8.

In the present Specification "comprises" means "includes or consists of" and "comprising" means "including or consisting of".

## Claims

1. A safety device to lift the rear part of the hood or bonnet (1) of a motor vehicle, the rear part of the hood or bonnet (1) being connected to the main part of the vehicle by a hinge (2) to permit the front part of the hood or bonnet (1) to be opened, the hinge comprising a lower mounting arm (3) and also an upper mounting arm (7) having a first end thereof pivotally connected (6) to the main cart of the vehicle and having part thereof releasably connected to the hood or bonnet (1) by a releasable connection (30), wherein there is a release mechanism to release said releasable connection (30), and a flange (13) depending from the rear part of the hood or bonnet (1) at a position in the region of the mounting arms (3,7), **characterised in that** the hinge (2) is associated with a gas spring unit (16), the gas spring unit (16) being pivotally connected at one end to the flange (13) by means of a connection (15), and being connected at the other end to an anchoring point (17) to raise the rear part of the hood or bonnet (1) when said releasable connection is released.

2. A safety device according to claim 1 wherein the upper mounting arm (7) has a second end thereof connected to said flange (13) provided on the hood or bonnet (1) by means of a pin-in-slot connection (10,14), the releasable connection (30) serving to connect another part of the flange (13) to the upper mounting arm (7).

3. A safety device according to claim 1 or claim 2 wherein the gas spring unit (16) is located to retain the hood or bonnet (1) in an open condition when the front part of the hood or bonnet (1) is open.

4. A safety device according to any one of the preceding claims wherein the releasable connection (30) comprises a piston element (45;96) contained within a housing mounted on the gas spring unit (16), a piston rod (47;98) of the piston element (45;96) protruding from the housing and engaging an aperture (9) formed in the upper mounting arm (7), the piston rod (47; 98) being movable to a retracted position in which the piston rod (47; 98) is withdrawn into the housing, thus disengaging the piston rod (47; 98) from the aperture (9).

5. A safety device according to claim 4 wherein a pyrotechnic unit (106) is provided to supply gas to move the piston rod (47; 98) to the retracted position.

6. A safety device according to claim 5 wherein the piston element (45; 96) comprises a piston head (46; 97) and said piston rod (47; 98), the piston head (46; 97) being received within a chamber (44; 95) formed within said housing, the piston rod (47; 98) initially projecting from said housing, there being a gas supply duct (43; 104, 105) to supply gas to the chamber (44; 95) in which the piston rod (47; 98) moves at a position between the piston head (46; 97) and one end of the chamber to move the piston rod (47; 98) to a retracted position.

7. A safety device according to claim 6 wherein the piston head (97) has a hollow spigot (104) directed towards the pyrotechnic unit (106), the spigot (104) leading to a gas opening provided adjacent the piston head (97) so that gas flows through the spigot (104) and moves the piston rod (98) towards the pyrotechnic unit (106).

8. A safety device according to any one of claims 5 to 7 wherein the gas spring unit (16) is initially sealed by a rupturable membrane (93) which is ruptured as a consequence of actuation of the pyrotechnic unit (106), the rupturable membrane (93) communicating with a gas flow path which leads to atmosphere.

9. A safety device according to claim 8 wherein the piston element (96) is provided with a hollow extension (99) initially located adjacent the rupturable membrane (93), the piston element (96) being located to receive gas from the pyrotechnic unit (106) to move the piston element (96) to rupture the rupturable membrane (93) and to open the gas flow path to atmosphere.

10. A safety device according to any one of claims 1 to 3 wherein the gas spring unit (16) is initially sealed by a rupturable membrane (35), there being a solenoid (37) driven plunger (38) having an extension (41) located, on movement of the plunger (38) as a consequence of actuation of the solenoid (37), to rupture the rupturable membrane (35), the extension (41) and the plunger (38) defining a gas flow duct leading to a chamber (44) containing a piston element (45), with a piston rod (47), such that gas flowing through the gas flow duct will cause the piston rod (47) to move, retracting part of the piston rod (47) and also opening a vent aperture (51) leading to atmosphere.

11. A safety device according to claim 4, wherein the gas spring unit (16) is initially sealed by a rupturable membrane (35), there being a solenoid (37) driven plunger (38) having an extension (41) located, on movement of the plunger (38) as a consequence of actuation of the solenoid (37), to rupture the rupturable membrane (35), the extension (4) and the plunger (38) defining a gas flow duct leading to a chamber (44) containing said piston element (45) with said piston rod (47), such that gas flowing through the gas flow duct will cause the piston rod (47) to move, retracting part of the piston rod (47) and also opening a vent aperture (51) leading to atmosphere.

12. A safety device according to any preceding claim, wherein the gas spring unit (16) is oriented so as to be inclined relative to the longitudinal axis of the hood or bonnet (1) in the region of the hinge (2), after the hood or bonnet (1) is closed.

## Patentansprüche

1. Eine Sicherheitsvorrichtung zum Anheben des hinteren Teils der Motor- oder Kühlerhaube (1) eines Kraftfahrzeugs, wobei der hintere Teil der Motor- oder Kühlerhaube (1) durch ein Scharnier (2) mit dem Hauptteil des Fahrzeugs verbunden ist, sodass der vordere Teil der Motor- oder Kühlerhaube (1) geöffnet werden kann, wobei das Scharnier einen unteren Befestigungsarm (3) umfasst und auch einen oberen Befestigungsarm (7), der ein erstes, mit dem Hauptteil des Fahrzeugs schwenkbar verbundenes (6) Ende und einen mit der Motor- oder Kühlerhaube (1) durch eine lösbare Verbindung (30) lösbar verbundenen Teil aufweist, wobei ein Lösemechanismus zum Lösen der lösbaren Verbindung (30) und ein Flansch (13), der am hinteren Teil der Motor- oder Kühlerhaube (1) an einer Position im Bereich der Befestigungsarme (3, 7) angebracht ist, vorhanden sind, **dadurch gekennzeichnet, dass** das Scharnier (2) mit einer Gasfedereinheit (16) in Zusammenhang steht, wobei die Gasfedereinheit (16) an einem Ende mittels einer Verbindung (15) mit dem Flansch (13) schwenkbar verbunden ist und am anderen Ende mit einem Verankerungspunkt (17) zum Anheben des hinteren Teils der Motor- oder Kühlerhaube (1) beim Lösen der lösbaren Verbindung verbunden ist.

2. Eine Sicherheitsvorrichtung gemäß Anspruch 1, bei der der obere Befestigungsarm (7) ein zweites Ende aufweist, das mit dem an der Motor- oder Kühlerhaube (1) vorhandenen Flansch (13) durch eine Stiftschlitzverbindung (10, 14) verbunden ist, wobei die lösbare Verbindung (30) zum Verbinden eines anderen Teils des Flansches (13) mit dem oberen Befestigungsarm (7) dient.

3. Eine Sicherheitsvorrichtung gemäß Anspruch 1 oder Anspruch 2, bei der die Gasfedereinheit (16) so positioniert ist, dass die Motor- oder Kühlerhaube (1) in einem geöffneten Zustand gehalten wird, wenn der vordere Teil der Motor- oder Kühlerhaube (1) geöffnet ist.

4. Eine Sicherheitsvorrichtung gemäß einem der vorangehenden Ansprüche, bei der die lösbare Verbindung (30) ein Kolbenelement (45; 96) umfasst, dass sich innerhalb eines an der Gasfedereinheit (16) angebrachten Gehäuses befindet, wobei eine Kolbenstange (47; 98) des Kolbenelements (45; 96) aus dem Gehäuse hervorsteht und mit einer im oberen Befestigungsarm (7) ausgebildeten Aussparung (9) in Eingriff steht, wobei die Kolbenstange (47; 98) in eine eingefahrene Position verschiebbar ist, in der die Kolbenstange (47; 98) in das Gehäuse zurückgezogen ist, sodass die Kolbenstange (47; 98) nicht mehr in die Aussparung (9) eingreift.

5. Eine Sicherheitsvorrichtung gemäß Anspruch 4, bei der eine pyrotechnische Einheit (106) vorhanden ist, um Gas zum Verschieben der Kolbenstange (47; 98) in die eingefahrene Position zuzuführen.

6. Eine Sicherheitsvorrichtung gemäß Anspruch 5, bei der das Kolbenelement (45; 96) einen Kolbenkopf (46; 97) und die Kolbenstange (47; 98) umfasst, wobei der Kolbenkopf (46; 97) in einer im Gehäuse ausgebildeten Kammer (44; 95) aufgenommen wird, wobei die Kolbenstange (47; 98) anfänglich aus dem Gehäuse herausragt, wobei ein Gaszufuhrkanal (43; 104, 105) zum Zuführen von Gas zur Kammer (44; 95) vorhanden ist, in der sich die Kolbenstange (47; 98) an einer Position zwischen dem Kolbenkopf (46; 97) und einem Ende der Kammer zum Verschieben der Kolbenstange (47; 98) in eine eingefahrene Position verschiebt.

7. Eine Sicherheitsvorrichtung gemäß Anspruch 6, bei der der Kolbenkopf (97) einen hohlen Zapfen (104) aufweist, der auf die pyrotechnische Einheit (106) ausgerichtet ist, wobei der Zapfen (104) zu einer neben dem Kolbenkopf (97) befindlichen Gasöffnung führt, sodass das Gas durch den Zapfen (104) strömt und die Kolbenstange (98) in Richtung der pyrotechnischen Einheit (106) verschiebt.

8. Eine Sicherheitsvorrichtung gemäß einem der Ansprüche 5 bis 7, bei der die Gasfedereinheit (16) anfänglich durch eine zerreißbare Membran (93) verschlossen wird, die infolge der Betätigung der pyrotechnischen Einheit (106) zerrissen wird, wobei die zerreißbare Membran (93) mit einem Gasströmungsweg in Verbindung steht, der zur Umgebungsluft führt.

9. Eine Sicherheitsvorrichtung gemäß Anspruch 8, bei der das Kolbenelement (96) mit einer hohlen Verlängerung (99) versehen ist, die anfänglich neben der zerreißbaren Membran (93) positioniert ist, wobei das Kolbenelement (96) so positioniert ist, dass ihm Gas von der pyrotechnischen Einheit (106) zugeführt wird, sodass das Kolbenelement (96) zum Zerreißen der zerreißbaren Membran (93) und zum Öffnen des Gasströmungswegs zur Umgebungsluft verschoben wird.

10. Eine Sicherheitsvorrichtung gemäß einem der Ansprüche 1 bis 3, bei der die Gasfedereinheit (16) anfänglich durch eine zerreißbare Membran (35) verschlossen wird, wobei ein durch ein Magnetventil (37) betriebener Kolben (38) vorhanden ist, der eine Verlängerung (41) aufweist, die auf eine Verschiebung des Kolbens (38) infolge einer Betätigung des Magnetventils (37) hin so positioniert wird, dass die zerreißbare Membran (35) zerrissen wird, wobei die Verlängerung (41) und der Kolben (38) einen Gasströmungskanal beschreiben, der zu einer Kammer (44) führt, die ein Kolbenelement (45) mit einer Kolbenstange (47) enthält, sodass durch den Gasströmungskanal strömendes Gas ein Sichverschieben der Kolbenstange (47), das Einfahren eines Teils der Kolbenstange (47) sowie das Öffnen einer zur Umgebungsluft führenden Lüftungsaussparung (51) bewirkt.

11. Eine Sicherheitsvorrichtung gemäß Anspruch 4, bei der die Gasfedereinheit (16) anfänglich durch eine zerreißbare Membran (35) verschlossen wird, wobei ein durch ein Magnetventil (37) betriebener Kolben (38) vorhanden ist, der eine Verlängerung (41) aufweist, die auf eine Verschiebung des Kolbens (38) infolge einer Betätigung des Magnetventils (37) hin so positioniert wird, dass die zerreißbare Membran (35) zerrissen wird, wobei die Verlängerung (41) und der Kolben (38) einen Gasströmungskanal beschreiben, der zu einer Kammer (44) führt, die das Kolbenelement (45) mit der Kolbenstange (47) enthält, sodass durch den Gasströmungskanal strömendes Gas ein Sichverschieben der Kolbenstange (47), das Einfahren eines Teils der Kolbenstange (47) sowie das Öffnen einer zur Umgebungsluft führenden Lüftungsaussparung (51) bewirkt.

12. Eine Sicherheitsvorrichtung gemäß einem der vorangehenden Ansprüche, bei der die Gasfedereinheit (16) so ausgerichtet ist, dass sie in Bezug zur Längsachse der Motor- oder Kühlerhaube (1) im Bereich des Scharniers (2) geneigt ist, nachdem die Motor- oder Kühlerhaube (1) geschlossen wurde.

## Revendications

1. Un dispositif de sécurité pour soulever la partie arrière du capot (1) d'un véhicule à moteur, la partie arrière du capot (1) étant connectée à la partie principale du véhicule par une charnière (2) pour permettre à la partie avant du capot (1) d'être ouverte, la charnière comportant un bras de montage inférieur (3) et également un bras de montage supérieur (7) ayant une première extrémité de ce dernier connectée de façon pivotante (6) à la partie principale du véhicule et ayant une partie de ce dernier connectée de façon libérable au capot (1) par une connexion libérable (30), où il y a un mécanisme de libération pour libérer ladite connexion libérable (30) et une bride (13) dépendant de la partie arrière du capot (1) à une position dans la région des bras de montage (3, 7), **caractérisé en ce que** la charnière (2) est associée à une unité de source de gaz (16), l'unité de source de gaz (16) étant connectée de façon pivotante à une extrémité de la bride (13) au moyen d'une connexion (15), et étant connectée à l'autre extrémité à un point d'ancrage (17) pour relever la partie arrière du capot (1) quand ladite connexion libérable est libérée.

2. Un dispositif de sécurité selon la revendication 1 où le bras de montage supérieur (7) a une deuxième extrémité de ce dernier connectée à ladite bride (13) fournie sur le capot (1) au moyen d'une connexion à ergot coulissant (10, 14), la connexion libérable (30) servant à connecter une autre partie de la bride (13) au bras de montage supérieur (7).

3. Un dispositif de sécurité selon la revendication 1 ou la revendication 2 où l'unité de source de gaz (16) est située pour retenir le capot (1) dans une condition ouverte quand la partie avant du capot (1) est ouverte.

4. Un dispositif de sécurité selon n'importe laquelle des revendications précédentes où la connexion libérable (30) comporte un élément de piston (45 ; 96) contenu à l'intérieur d'un logement monté sur l'unité de source de gaz (16), une tige de piston (47 ; 98) de l'élément de piston (45 ; 96) faisant saillie à partir du logement et s'engageant dans une ouverture (9) formée dans le bras de montage supérieur (7), la tige de piston (47 ; 98) pouvant se déplacer dans une position rétractée dans laquelle la tige de piston (47 ; 98) est retirée dans le logement, dégageant ainsi la tige de piston (47 ; 98) de l'ouverture (9).

5. Un dispositif de sécurité selon la revendication 4 où une unité pyrotechnique (106) est fournie pour fournir du gaz afin de déplacer la tige de piston (47 ; 98) dans la position rétractée.

6. Un dispositif de sécurité selon la revendication 5 où l'élément de piston (45 ; 96) comporte une tête de piston (46 ; 97) et ladite tige de piston (47 ; 98), la tête de piston (46 ; 97) étant reçue à l'intérieur d'une chambre (44 ; 95) formée à l'intérieur dudit logement, la tige de piston (47 ; 98) faisant initialement saillie à partir dudit logement, un conduit d'alimentation en gaz (43 ; 104, 105) étant présent pour fournir du gaz à la chambre (44 ; 95) dans laquelle la tige de piston (47 ; 98) se déplace à une position entre la tête de piston (46 ; 97) et une extrémité de la chambre pour déplacer la tige de piston (47 ; 98) dans une position rétractée.

7. Un dispositif de sécurité selon la revendication 6 où la tête de piston (97) a un ergot creux (104) dirigé vers l'unité pyrotechnique (106), l'ergot (104) menant à une ouverture à gaz fournie de façon adjacente à la tête de piston (97) de sorte que le gaz s'écoule par l'ergot (104) et déplace la tige de piston (98) vers l'unité pyrotechnique (106).

8. Un dispositif de sécurité selon n'importe laquelle des revendications 5 à 7 où l'unité de source de gaz (16) est initialement fermée hermétiquement par une membrane pouvant être rompue (93) qui est rompue suite à l'activation de l'unité pyrotechnique (106), la membrane pouvant être rompue (93) communiquant avec une voie d'écoulement de gaz qui mène à l'atmosphère.

9. Un dispositif de sécurité selon la revendication 8 où l'élément de piston (96) est muni d'une extension creuse (99) initialement située de façon adjacente à la membrane pouvant être rompue (93), l'élément de piston (96) étant situé pour recevoir du gaz de l'unité pyrotechnique (106) afin de déplacer l'élément de piston (96) pour rompre la membrane pouvant être rompue (93) et pour ouvrir la voie d'écoulement de gaz vers l'atmosphère.

10. Un dispositif de sécurité selon n'importe laquelle des revendications 1 à 3 où l'unité de source de gaz (16) est initialement fermée hermétiquement par une membrane pouvant être rompue (35), un plongeur (38) étant présent entraîné par solénoïde (37) ayant une extension (41) située, lors du déplacement du plongeur (38) suite à l'activation du solénoïde (37), pour rompre la membrane pouvant être rompue (35), l'extension (41) et le plongeur (38) définissant un conduit d'écoulement de gaz menant à une chambre (44) contenant un élément de piston (45), avec une tige de piston (47), de telle sorte que le gaz s'écoulant par le conduit d'écoulement de gaz amènera la tige de piston (47) à se déplacer, rétractant une partie de la tige de piston (47) et ouvrant également une ouverture de ventilation (51) menant à l'atmosphère.

11. Un dispositif de sécurité selon la revendication 4, où l'unité de source de gaz (16) est initialement fermée hermétiquement par une membrane pouvant être rompue (35), un plongeur (38) étant présent entraîné par solénoïde (37) ayant une extension (41) située, lors du déplacement du plongeur (38) suite à l'activation du solénoïde (37), pour rompre la membrane pouvant être rompue (35), l'extension (4) et le plongeur (38) définissant un conduit d'écoulement de gaz menant à une chambre (44) contenant ledit élément de piston (45) avec ladite tige de piston (47), de telle sorte que le gaz s'écoulant par le conduit d'écoulement de gaz amènera la tige de piston (47) à se déplacer, rétractant une partie de la tige de piston (47) et ouvrant également une ouverture de ventilation (51) menant à l'atmosphère.

12. Un dispositif de sécurité selon n'importe quelle revendication précédente, où l'unité de source de gaz (16) est orientée de sorte à être inclinée relativement à l'axe longitudinal du capot (1) dans la région de la charnière (2), après que le capot (1) a été fermé.
